# DEMANDE DE BREVET EUROPEEN

(11) **EP 0 784 257 A1**
(43) Date de publication de la demande: **16.07.1997**
(21) Numéro de dépôt: 96402552.2
(22) Date de dépôt: 27.11.1996
(51) Int. Cl.: G06F 1/00, G06F 9/45

(54) **Système de protection de logiciel pour ordinateur écrit en langage interprété**

(30) Priorité: 21.12.1995 FR 9515287
(71) Demandeur: BULL S.A., 78430 Louveciennes (FR)
(72) Inventeur: Sitbon, Gérard, 94400 Vitry (FR); Baillif, Christian, 92340 Bourg la Reine (FR); Gobert, Daniel, 91380 Chilly Mazarin (FR); Urbain, François, 75002 Paris (FR)
(74) Mandataire: Gouesmel, Daniel

(57) **Abrégé**

Procédé de protection de logiciel écrit pour ordinateur (ORD) en langage interprété où :
1) on écrit le programme en clair dans un fichier script (FSI),
caractérisé en ce que :
2) on génère un code compilé (EXECI) à partir du contenu de ce fichier (FSI),
3) on exécute ce code compilé (EXECI) qui :
   a) crée un tube de communication (PI) avec un interpréteur (INTI) associé au langage utilisé dans ce fichier (FSI),
   b) fournit à cet interpréteur, par l'intermédiaire du tube (PI), le contenu du fichier script initial,
4) l'interpréteur lit ce contenu et l'exécute sur l'ordinateur (ORD).

Applicable à l'écriture de logiciels pour ordinateur.

## Description

La présente invention concerne un procédé de protection de logiciel pour ordinateur, écrit en langage interprété et le système de protection de logiciel écrit en langage interprété qui le met en oeuvre. Elle est plus particulièrement applicable à la protection des fichiers de commandes contenant des scénarios de commandes encore appelés "scripts" par les hommes du métier, fichiers que l'on trouve dans les systèmes informatiques.

### LE DOMAINE TECHNIQUE

Dans la pratique actuelle, il existe deux procédés courants d'écriture de logiciel sur ordinateur, le premier dit compilé utilisant un langage destiné à être compilé, le second dit interprété utilisant un langage destiné à être interprété.

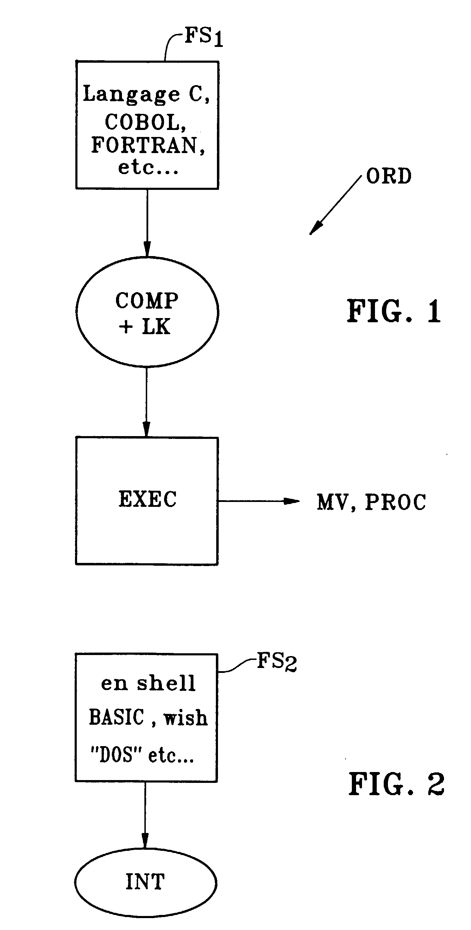

Le premier illustré par la figure 1 consiste à :
- écrire le logiciel en clair dans un fichier FS1 appelé "fichier source", par exemple en langage C, C++, COBOL, FORTRAN, etc..
- soumettre le contenu de ce fichier à un compilateur COMP qui traduit ce logiciel en une suite d'instructions exécutable par l'ordinateur, cette suite formant un fichier étant appelé "fichier exécutable binaire" EXEC,
- charger cette suite dans la mémoire vive MV de l'ordinateur ORD pour être exécutée par au moins l'un des processeurs PROC de ce dernier.

Le second illustré par la figure 2 consiste à :
- écrire le logiciel en clair dans un fichier appelé "fichier script" FS2, par exemple en langage shell, awk, BASIC, wish, etc.., tous ces langages étant normalisés,
- soumettre le contenu de ce fichier à un interpréteur INT qui lit les instructions du fichier script et les exécute sur l'ordinateur.

Le second présente par rapport au premier les avantages suivants :
- une plus grande rapidité de développement,
- plus grande facilité de mise au point,
- niveau de programmation plus élevé.

### LE PROBLEME POSE

En revanche, il a l'inconvénient de mettre à la disposition de tout utilisateur les fichiers scripts du fabricant de ce logiciel, lesquels constituent son investissement humain et financier majeur vis-à-vis de ce dernier. En effet, le contenu de ces fichiers est en clair, donc lisible ce qui signifie que tout homme du métier peut en comprendre la sémantique en en lisant le texte sur un support quelconque, papier, écran de terminal informatique, par exemple.

L'invention se propose de remédier à cet inconvénient en fournissant à l'utilisateur non pas les fichiers scripts mais des fichiers exécutables compilés et ceci sans changer ni les fichiers scripts (qui restent chez le fabricant) d'origine ni l'interpréteur qui, lui, est toujours à la disposition du client. Ceci s'effectue en insérant entre les fichiers scripts et l'interpréteur un générateur de code exécutable. C'est cet exécutable conçu par le fabricant et non lisible au sens défini ci - dessus qui est fourni à l'utilisateur.

### L'OBJET DE L'INVENTION

Selon l'invention, le procédé de protection de logiciel pour ordinateur, écrit en langage interprété comportant la première opération suivante :
**Opération 1 :**
   On écrit le logiciel en clair dans un fichier appelé "fichier script", qui comprend une pluralité de scénarios de commande, encore appelés scripts,
   est caractérisé en ce que il comprend en outre les trois opérations suivantes :
**Opération 2 :**
   On génère un code compilé non lisible à partir du contenu de ce fichier script,
**Opération 3 :**
   On exécute ce code compilé qui :
   a) crée un tube de communication avec un interpréteur qui correspond au langage utilisé dans le fichier script,
   b) fournit à cet interpréteur, par l'intermédiaire du tube, le contenu du fichier script initial,
**Opération 4 :**
   On lit ce contenu au moyen de l'interpréteur qui l'exécute sur l'ordinateur.

D'autres caractéristiques et avantages de la présente invention apparaîtront dans la description suivante donnée à titre d'exemple non limitatif et en se référant aux dessins annexés. Sur ces dessins :
- La figure 1 montre un système de mise en oeuvre du premier procédé de programmation selon l'art antérieur,
- La figure 2 montre un système de mise en oeuvre du second procédé de programmation selon l'art antérieur,
- La figure 3 montre le système mettant en oeuvre le procédé de programmation selon l'invention.

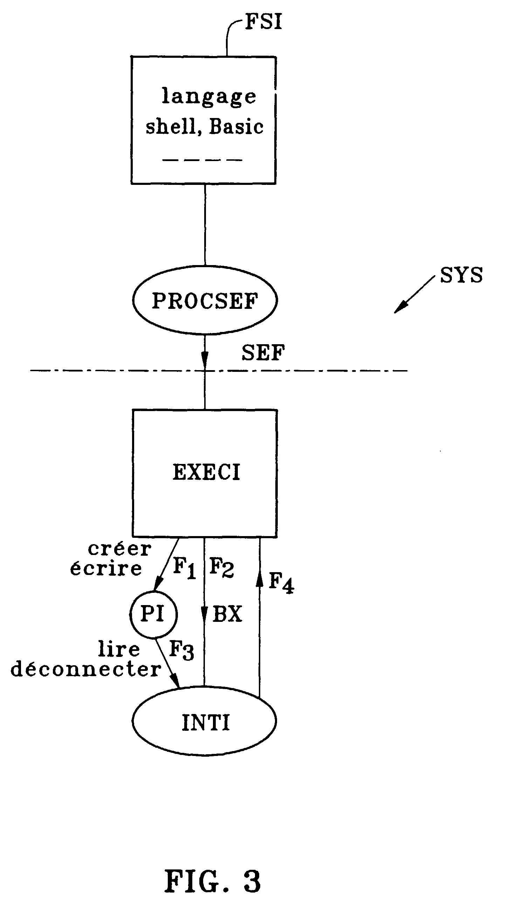

On se reporte à la figure 3.

### UN EXEMPLE DE SYSTEME SELON L'INVENTION

Le système SYS de mise en oeuvre du procédé de protection de logiciel selon l'invention comprend :
- le fichier source FSI qui est un fichier script de type texte contenant des commandes écrites en clair, c'est-à-dire lisibles par des outils classiques d'édition. Elles sont écrites dans un langage normalisé bien connu de l'homme du métier, par exemple l'un des langages suivants Shell, BASIC, awk, wish, DOS, etc..
- le processeur PROCSEF qui transforme le contenu du fichier de commandes FSI en contenu de fichier exécutable, le rendant ainsi illisible par les outils d'édition de texte connus tels que, par exemple, *vi, more, strings,* ceux-ci étant spécifiques du monde UNIX (système d'exploitation standard pour ordinateur, marque déposée)
- le fichier EXECI qui contient les commandes exécutables résultant de la transformation effectuées par le processeur PROCSEF.
- l'interpréteur de commandes INTI qui est un logiciel exécutant les commandes contenues dans le fichier EXECI et est donc spécifique du langage en clair utilisé pour écrire le logiciel.

Dans la pratique, le fichier FSI et le processeur PROCSEF restent chez le fabricant et concepteur du logiciel et ne sont donc pas mis à la disposition de l'utilisateur qui n'en prend jamais connaissance.

Par contre, le fichier EXECI et l'interpréteur INTI qui sont également conçus par le fabricant sont livrés par ce dernier à l'utilisateur.
Cette séparation entre FSI-PROCSEF d'une part et EXECI-INTI d'autre part est symbolisée par la ligne horizontale en traits interrompus, sise au milieu de la figure 3.

### UN EXEMPLE DE PROCEDE SELON L'INVENTION

Les grandes lignes du fonctionnement du système SYS correspondent aux différentes étapes du procédé selon l'invention et sont les suivantes :
1) on écrit le programme en clair dans le fichier script FSI au moyen d'une pluralité de commandes de type ascii (shell, awk, etc.. ). Ceci est effectué par l'opérateur humain concepteur du programme.
2) on génère au moyen du processeur PROCSEF qui utilise pour chaque script une commande appelée SEF qui sera détaillée ci-dessous, un code compilé non lisible à partir du contenu de ce fichier script. PROCSEF transforme ainsi chaque script en ce que l'on appelle un exécutable compilé, qui est donc constitué d'un ensemble de lignes de code compilé formant l'exécutable EXECI.
3) on exécute ce code compilé de la manière suivante :
   a) EXECI créée un tube ou canal de communication PI avec l'interpréteur INTI,
   b) fournit à cet interpréteur, par l'intermédiaire du tube PI, le contenu du fichier script initial FSI,
4) l'interpréteur INTI lit ce contenu et l'exécute sur l'ordinateur ORD.

La structure détaillée de la commande SEF est donnée en annexe 1. Elle comprend essentiellement une première partie définissant la syntaxe qui doit être utilisée à l'intérieur de l'ensemble de cette commande et une seconde partie définissant les différentes options possibles précisant notamment le nom de l'interpréteur INTI et du fichier de sortie EXECI.

A partir du moment où une commande SEF a été transmise au processeur PROCSEF, le mode général de transformation des commandes en clair en lignes de code compilé consiste à remplacer les mots du fichier de commandes FSI par des références à un catalogue de mots prédéfinis.

Un programme compilable en langage C est alors généré. Il permet alors à toutes les lignes du fichier FSI d'être formatées et à tous les mots (suite des caractères alphabétiques) d'être convertis en références. Ce programme est celui contenu dans le fichier EXECI.
Lors de l'exécution du programme compilé, on reconstitue d'abord la forme originale du contenu de FSI ( on voit donc que, de fait, à l'intérieur du fichier EXECI, le programme en clair est contenu, mais cela est rendu invisible à l'utilisateur) puis les différentes commandes contenues dans celui-ci sont exécutées par INTI, puisque ce dernier est spécifique du langage en clair dans lequel les différentes commandes sont écrites dans FSI et en comprend donc les instructions.

La génération du logiciel compilable en langage C qui permet de construire le fichier EXECI et qui résulte de l'utilisation de la commande SEF par PROCSEF est effectuée par le fabricant.
Elle comprend les quatre phases suivantes :
1) génération des lignes de programme C dans le but de créer deux tableaux :
   - le premier T1 pour contenir les différents mots (chaînes de caractères) utilisés dans le logiciel,
   - le second T2 pour contenir les différents types formats de lignes incluant chacun un nombre déterminé de mots.
   Cette technique de génération est parfaitement connue de l'homme du métier.
2) pour chaque ligne du programme de commandes :
   - recherche des différents mots utilisés dans la ligne courante,
   - chaque nouveau mot est placé dans T1 et numéroté,
   - chaque nouveau type de ligne est placé dans T2 et numéroté,
   - construction de la ligne de programme C en utilisant les numéros associés au type et aux mots de la ligne.
3) génération des lignes de programme C permettant d'écrire dans le tuyau PI le logiciel contenu dans FSI reconstitué (symbolisée par la flèche F1 allant de EXECI à PI, à la figure 3) et qui s'accompagne parallèlement des étapes suivantes :
   - authentification et appel de l'interpréteur de commandes (symbolisée par la flèche F2 allant de EXECI à INTI à la figure 3),
   - attente de la fin de l'exécution du script par retour de l'information de status indiquant cette fin (symbolisée par la flèche F4, allant de INTI à EXECI, à la figure 3),
4) compilation du programme C.

La commande SEF retourne différents types de messages au processeur PROCSEF. Ces messages qui sont indiqués en annexe 2 sont les suivants :
- les messages d'erreur qui signalent une mauvaise utilisation de la commande SEF,
- les messages d'avertissement (warning, en anglais) qui indiquent que certaines précautions doivent être prises au niveau de la commande,
- les messages d'erreurs internes qui signalent un mauvais fonctionnement de la commande SEF. Le fichier d'erreur alors généré sera utile pour analyser le problème.

Une fois un script quelconque transformé grâce à une commande SEF en un exécutable compilé, son exécution se déroule de la manière suivante. Elle comporte quatre opérations :
A) l'exécutable EXECI crée le canal de communication PI avec INTI en lui attribuant un nom déterminé,
B) il authentifie INTI par exemple par un système de signature connu de l'homme du métier sous le vocable anglo-saxon de "checksum" et le lance en lui donnant comme paramètre le nom du canal PI,
C) il transmet le script vers INTI à travers le canal PI (flèche F3, à la figure 3),
D) il attend la fin de l'exécution du script par INTI, détruit le canal PI et met fin à l'exécution dès réception du status d'exécution du script (flèche F4).

Suivant la qualité du fonctionnement du système SYS, des messages d'erreurs donnés en annexe 2 sont retournés à l'utilisateur du logiciel pendant l'exécution du script par EXECI, par exemple à travers la sortie standard d'erreur *(stderr)* si l'on utilise le standard UNIX . Le champ <raison> est un message décrivant l'erreur rencontrée. Ce message est fourni par l'ordinateur ORD à l'utilisateur.

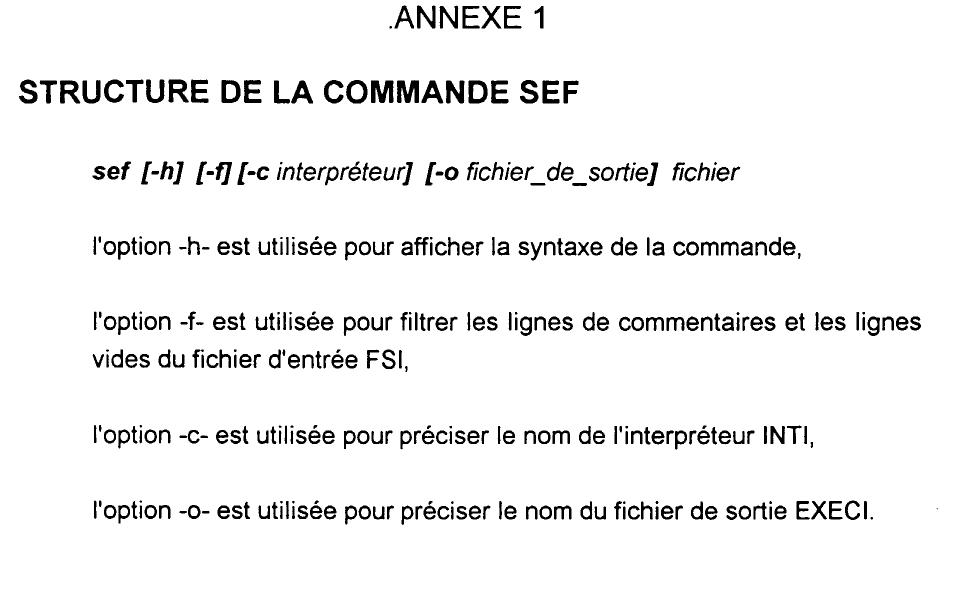

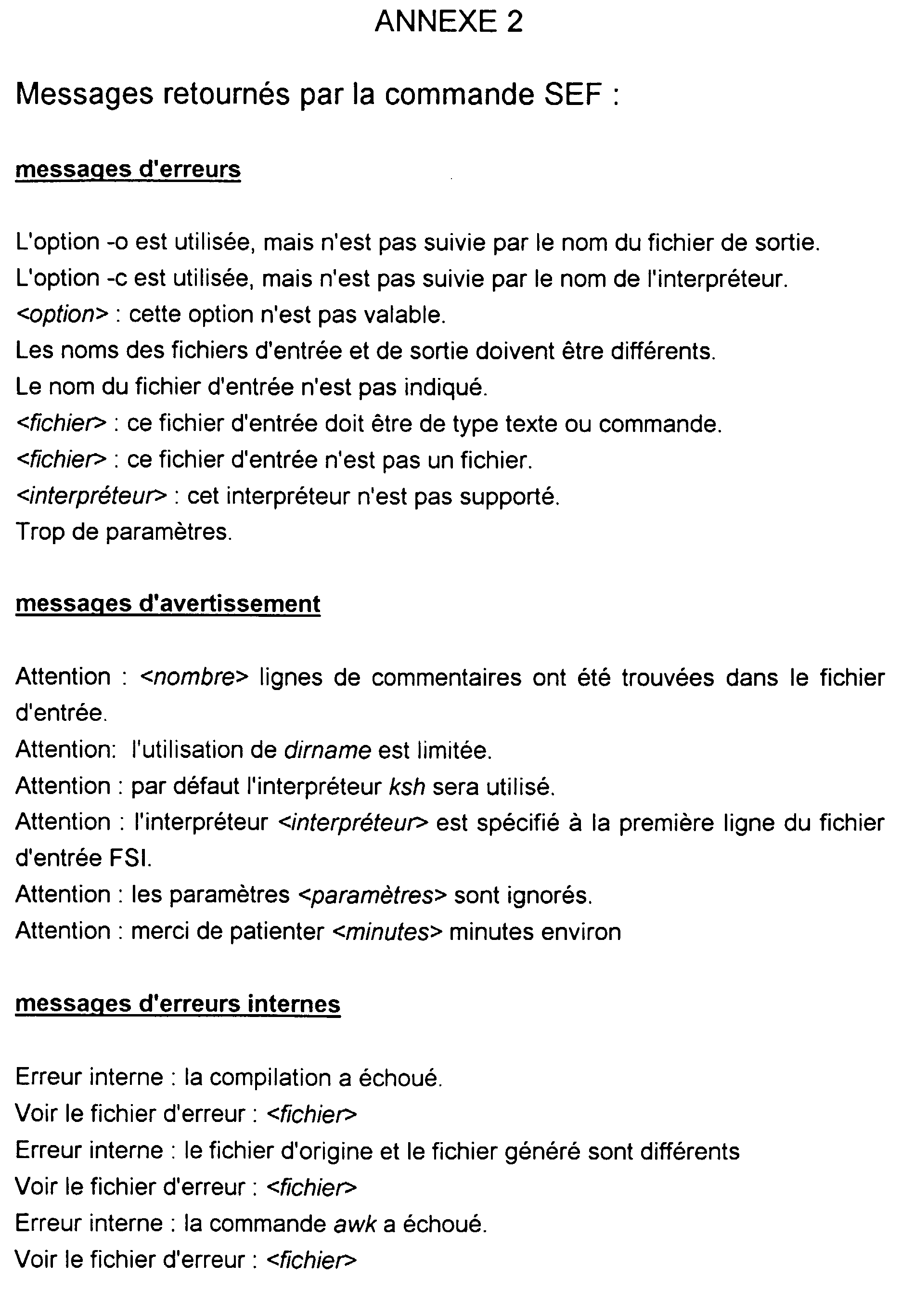

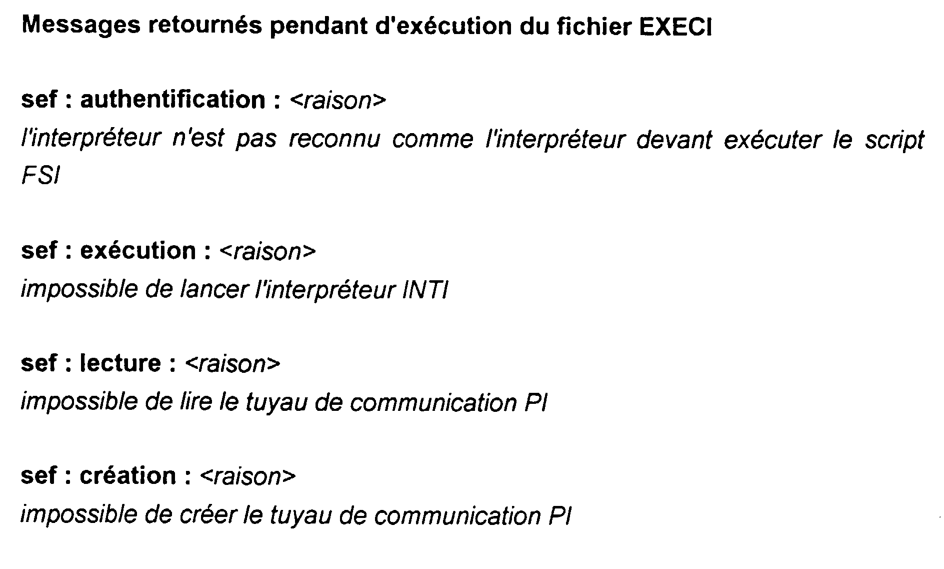

## Revendications

1. Procédé de protection de logiciel pour ordinateur (ORD), écrit en langage interprété comportant la première opération :
**Opération 1 :**
on écrit le programme en clair dans un fichier (FSI) appelé "fichier script", qui comprend une pluralité de scénarios de commande, encore appelés scripts,
caractérisé en ce que il comprend en outre les trois opérations suivantes :
**Opération 2 :**
on génère un code compilé (EXECI) non lisible à partir du contenu de ce fichier script (FSI),
**Opération 3 :**
on exécute ce code compilé (EXECI) qui :
a) crée un tube de communication (PI) avec un interpréteur (INTI) qui est associé au langage utilisé dans le fichier script,
b) fournit à cet interpréteur, par l'intermédiaire du tube (PI) , le contenu du fichier script initial,
**Opération 4 :**
On lit ce contenu au moyen de l'interpréteur qui l'exécute sur l'ordinateur (ORD).

2. Procédé selon la revendication 1, caractérisé en ce que la génération du code compilé (EXECI) comprend les quatre phases suivantes :
*Phase 1* : génération des lignes de programme C dans le but de créer deux tableaux :
- le premier T1 pour contenir les différents mots (chaînes de caractères) utilisés dans le logiciel,
- le second T2 pour contenir les différents types de formats de lignes incluant chacun un nombre déterminé de mots.
*Phase 2* : pour chaque ligne du programme de commandes :
- recherche des différents mots utilisés dans la ligne courante,
- chaque nouveau mot est placé dans T1 et numéroté,
- chaque nouveau type de ligne est placé dans T2 et numéroté,
- construction de la ligne de programme C en utilisant les numéros associés au type et aux mots de la ligne.
*Phase 3* : génération des lignes de programme C permettant d'écrire dans le tuyau PI le logiciel contenu dans FSI reconstitué,
*Phase 4* : compilation du programme C.

3. Procédé selon la revendication 2 caractérisé en ce que la phase 3 s'accompagne parallèlement des étapes suivantes :
- authentification et appel de l'interpréteur de commandes (INTI),
- attente de la fin de l'exécution du script par retour de l'information de status indiquant cette fin provenant du fichier exécutable (EXECI).

4. Procédé selon la revendication 1 caractérisé en ce que lors de l'opération 3a,
A) Le fichier exécutable (EXECI) crée le tube de communication (PI) en lui attribuant un nom déterminé,
B) il authentifie l'interpréteur (INTI) et le lance en lui donnant comme paramètre le nom du tube (PI),
et en ce que lors de l'opération 3b,
C) il transmet le script vers l'interpréteur (INTI) à travers le tube (PI),
D) il attend la fin de l'exécution du script par l'interpréteur (INTI), détruit le tube (PI) et met fin à l'exécution dès réception du status d'exécution du script.

5. Système de protection de logiciel écrit en langage interprété mettant en oeuvre le procédé selon la revendication 1 caractérisé en ce qu'il comprend :
- le fichier source de commandes (FSI) qui est un fichier contenant des commandes (scripts) écrites en clair, c'est-à-dire lisibles par des outils d'édition de texte,
- le processeur (PROCSEF) qui transforme le contenu du fichier de commandes (FSI) en contenu de fichier exécutable, le rendant ainsi illisible par les dits outils d'édition de texte,
- le fichier exécutable (EXECI) qui contient les commandes exécutables résultant de la transformation effectuées par le processeur PROCSEF.
- l'interpréteur de commandes (INTI) qui est un logiciel exécutant les commandes contenues dans le fichier exécutable (EXECI) et est spécifique du langage en clair utilisé pour écrire le logiciel.

6. Système de protection de logiciel écrit en langage interprété selon la revendication 5, caractérisé en ce que le processeur transforme le contenu du fichier de commandes en contenu de fichier exécutable au moyen d'une commande (SEF) spéciale comprenant une première partie définissant la syntaxe qui doit être utilisée à l'intérieur de l'ensemble de celle-ci et une seconde partie définissant les différentes options possibles en précisant notamment le nom de l'interpréteur INTI) et du fichier de sortie (EXECI).
